# FASCICULE DE BREVET EUROPEEN

(11) **EP 1 029 491 B1**
(45) Date de publication et mention de la délivrance du brevet: **21.01.2004**
(21) Numéro de dépôt: 00420036.6
(22) Date de dépôt: 17.02.2000
(51) Int. Cl.: A47J 37/12

(54) **Dispositif de sécurité et/ou de commande pour appareil électrique de cuisson**
Sicherheits- und/oder Kontrollvorrichtung für elektrische Kochgeräte
Security and/or control device for an electric cooking apparatus

(30) Priorité: 19.02.1999 FR 9902260
(43) Date de publication de la demande: 23.08.2000
(73) Titulaire: SEB S.A., 69130 Ecully (FR)
(72) Inventeur: Thevenin, Jean-Marie, 21610 Bourberain (FR)

(56) Documents cités:
- EP-A- 0 528 656
- WO-A-96/05761
- GB-A- 2 055 248
- GB-A- 2 222 025

## Description

La présente invention concerne le domaine technique général des appareils électriques de cuisson comprenant une enceinte de cuisson ainsi qu'un élément mobile ou amovible, tel que par exemple une cuve amovible, un couvercle ou encore une porte. La présente invention concerne notamment mais non exclusivement les friteuses électriques.

La présente invention se rapporte plus particulièrement aux dispositifs de sécurité et/ou de commande et de ces appareils.

Il est connu de réaliser des friteuses électriques à cuve amovible dans lesquelles les moyens de chauffe sont montés au fond d'un boîtier prévu pour recevoir la cuve amovible. Pour éviter le fonctionnement de l'appareil en l'absence de la cuve ou en présence d'une cuve mal positionnée, il est connu d'équiper les appareils de ce type avec un dispositif de détection de présence de cuve comportant un interrupteur prévu pour couper l'alimentation des moyens de chauffe en cas d'absence de la cuve dans le boîtier ou en cas d'un mauvais positionnement de la cuve.

Il est connu par ailleurs de réaliser des appareils électriques de cuisson comportant un interrupteur général de marche / arrêt.

Il est connu du document GB 2 222 025 un dispositif de sécurité et /ou de commande d'un appareil électrique comportant une enceinte associée à des moyens de chauffe, montée de manière amovible sur une base d'alimentation. Le dispositif comporte au moins un interrupteur apte à fermer le circuit d'alimentation des moyens de chauffe, cet interrupteur comportant un boîtier et un bouton d'enclenchement, un organe de détection mobile entre une première position de chauffe et une deuxième position d'arrêt, et un moyen de commande accessible de l'extérieur du boîtier, mobile entre une première position dite "marche" et une deuxième position dite "arrêt". L'appareil comporte en outre un actionneur bistable coopérant avec l'interrupteur.

L'actionneur est commandé par l'organe de détection, le moyen de commande et une surface de came de la base. Une telle construction est de conception coûteuse lorsque l'on souhaite commander un interrupteur par deux organes de détection ou un organe de commande.

L'objet de l'invention est de simplifier la construction de tels appareils électriques de cuisson et de réduire les coûts de fabrication.

Cet objet est atteint avec un dispositif de sécurité et /ou de commande d'un appareil électrique de cuisson comportant dans un boîtier une enceinte de cuisson et des moyens de chauffe de l'enceinte, ledit dispositif comportant
- au moins un interrupteur apte à fermer le circuit d'alimentation des moyens de chauffe, cet interrupteur comportant un boîtier et un bouton d'enclenchement,
- un organe de détection mobile entre une première position dite "sûre" correspondant à une configuration prédéterminée de mise en oeuvre de l'appareil et une deuxième position dite "non sûre" correspondant à une autre configuration dans laquelle l'appareil ne doit pas être mis en oeuvre,
- un moyen de commande accessible de l'extérieur du boîtier de l'appareil, mobile entre une première position dite "marche" et une deuxième position dite "arrêt",
du fait que le boîtier de l'interrupteur est monté mobile de telle sorte à être susceptible d'être déplacé par l'organe de détection passant en sa position sûre, respectivement par le moyen de commande passant en sa position marche, d'une première position de boîtier dite "non active" dans laquelle l'interrupteur est en un état ouvert ou fermé à une seconde position dite "active" dans laquelle l'interrupteur est basculé dans son autre état fermé ou ouvert par le moyen de commande passant en sa position "marche" respectivement par l'organe de détection passant en sa position "sûre".

Ces dispositions permettent notamment d'utiliser l'interrupteur d'un dispositif de détection de présence de cuve également comme interrupteur général de marche / arrêt de l'appareil, ou encore d'utiliser un interrupteur commun pour un dispositif de détection de présence de cuve et un dispositif de détection de fermeture d'un couvercle.

Selon un mode de réalisation le boîtier de l'interrupteur est monté libre en rotation sur un axe, l'organe de détection en position "sûre" étant susceptible d'agir sur le boîtier de l'interrupteur, respectivement sur le bouton de l'interrupteur, le moyen de commande en position "marche" étant alors susceptible d'agir sur le bouton, respectivement sur le boîtier.

Avantageusement alors le boîtier de l'appareil est réalisé en matière plastique et l'axe est obtenu lors du moulage dudit boîtier.

Alors, selon une autre caractéristique, le moyen de commande est mobile en rotation et comporte une came susceptible en position "marche" d'actionner le bouton de l'interrupteur, respectivement le boîtier de l'interrupteur, lorsque l'organe de détection est en position "sûre".

Selon un autre mode de réalisation, le boîtier de l'interrupteur est monté sur le moyen de commande, respectivement l'organe de détection, le bouton de l'interrupteur étant alors susceptible d'être actionné par l'organe de détection, respectivement par le moyen de commande.

Cet objet est également atteint avec un dispositif de sécurité et /ou de commande d'un appareil électrique de cuisson comportant dans un boîtier une enceinte de cuisson et des moyens de chauffe de l'enceinte, ledit dispositif comportant
- au moins un interrupteur apte à fermer le circuit d'alimentation des moyens de chauffe, cet interrupteur comportant un boîtier et un bouton d'enclenchement,
- un organe de détection mobile entre une première position dite "sûre" correspondant à une configuration prédéterminée de mise en oeuvre de l'appareil et une deuxième position dite "non sûre" correspondant à une autre configuration dans laquelle l'appareil ne doit pas être mis en oeuvre,
- un moyen de commande accessible de l'extérieur du boîtier, mobile entre une première position dite "marche" et une deuxième position dite "arrêt",
du fait qu'un élément de transmission monté sur l'organe de détection présente une partie mobile comprenant une zone de commande, déplaçable par le moyen de commande, une zone d'actionnement susceptible de coopérer avec l'interrupteur lorsque d'une part l'organe de détection est en position dite "sûre" et que d'autre part le moyen de commande est en position "marche", l'élément de transmission occupant alors une position dite "active" dans laquelle l'interrupteur est dans un état ouvert ou fermé, l'interrupteur étant dans son autre état fermé ou ouvert lorsque l'organe de détection est en position dite "non sûre" ou que le moyen de commande est en position "arrêt", la zone d'actionnement n'étant alors pas susceptible de coopérer avec l'interrupteur.

Ces dispositions permettent également d'utiliser l'interrupteur d'un dispositif de détection de présence de cuve également comme interrupteur général de marche / arrêt de l'appareil, ou encore d'utiliser un interrupteur commun pour un dispositif de détection de présence de cuve et un dispositif de détection de fermeture d'un couvercle.

Avantageusement la zone d'actionnement comporte une surface de came disposée perpendiculairement à la direction du déplacement de ladite zone d'actionnement entre la position occupée par ladite zone d'actionnement lorsque d'une part l'organe de détection est en position "non sûre" et que d'autre part le moyen de commande est en position "arrêt", et la position occupée par ladite zone d'actionnement lorsque d'une part l'organe de détection est en position dite "sûre" et que d'autre part le moyen de commande est en position "marche".

Cette disposition permet de faciliter l'actionnement de l'interrupteur quel que soit l'ordre d'actionnement de l'organe de détection et du moyen de commande ou du deuxième organe de détection.

Selon un mode de réalisation le boîtier de l'interrupteur est monté fixe dans le boîtier de l'appareil et la zone d'actionnement coopère avec le bouton de l'interrupteur lorsque l'élément de transmission occupe la position "active".

Selon un autre mode de réalisation le boîtier de l'interrupteur est monté mobile dans le boîtier de l'appareil et la zone d'actionnement coopère avec le boîtier de l'interrupteur pour repousser le bouton de l'interrupteur contre une butée du boîtier lorsque l'élément de transmission occupe la position "active". Avantageusement alors le boîtier de l'interrupteur est monté mobile en rotation autour d'un axe disposé dans le boîtier de l'appareil.

Avantageusement le moyen de commande est susceptible d'occuper plusieurs positions "marche".

Le moyen de commande est avantageusement formé par le bouton de commande d'un thermostat à température de consigne réglable, cette construction évitant un moyen de commande spécialisé pour l'interrupteur de marche / arrêt.

L'invention sera mieux comprise à l'étude des exemples de réalisation suivants, pris à titre nullement limitatif, et illustrés dans les figures annexées, dans lesquelles :
- la figure 1 montre une vue en éclaté d'un premier exemple de réalisation d'un dispositif selon l'invention,
- la figure 2 est une vue en coupe de la partie supérieure du dispositif montré à la figure 1,
- les figures 3 à 5 montrent trois positions de fonctionnement du dispositif montré aux figures 1 et 2,
- la figure 6 est une vue schématique d'un deuxième exemple de réalisation d'un dispositif selon l'invention,
- la figure 7 est une vue schématique d'un troisième exemple de réalisation d'un dispositif selon l'invention,
- les figures 8a à 8d sont des vues schématiques d'un quatrième exemple de réalisation d'un dispositif selon l'invention,
- les figures 9a et 9b sont des vues schématiques d'un cinquième exemple de réalisation d'un dispositif selon l'invention,

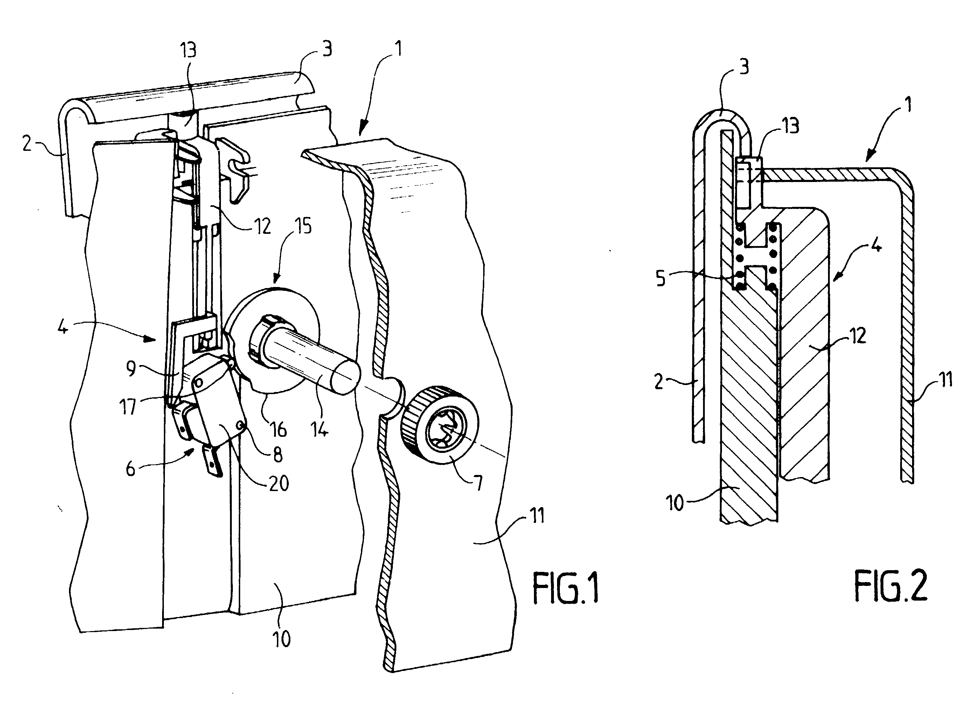

La figure 1 montre un dispositif de commande et de sécurité dans un appareil électrique de cuisson comportant un boîtier 1 formant un logement prévu pour recevoir une cuve 2 amovible. Le boîtier comporte une paroi intérieure 10 délimitant le logement de réception de la cuve 2 et une paroi extérieure 11 permettant de loger entre ladite paroi et la paroi intérieure 10 des organes tels qu'un thermostat ou encore un fusible thermique.

Le dispositif de commande et de sécurité comporte un organe de détection 4 de présence de la cuve 2. L'organe de détection 4 est disposé dans le boîtier 1 entre les parois 10 et 11. L'organe de détection 4 comporte une tige 12 montée coulissante dans le boîtier 1. La tige 12 porte un ergot 13 prévu pour coopérer avec le bord retourné 3 de la cuve 2 et une patte 9 prévue pour coopérer avec un interrupteur 6. L'ergot 13 forme ainsi une zone de détection de la cuve 2 et la patte 9 forme une zone d'actionnement de l'interrupteur 6. La figure 2 montre l'organe de détection 4 monté mobile contre un moyen de rappel 5.

Lorsque la cuve 2 est présente dans le boîtier 1 l'organe de détection 4 occupe une première position enfoncée dans laquelle l'interrupteur 6 est susceptible de fermer le circuit d'alimentation des moyens de chauffe de l'appareil (non montrés aux figures).

En cas d'absence de la cuve 2 ou en cas ou de mauvais positionnement de la cuve 2 dans le boîtier 1, l'organe de détection 4 occupe une deuxième position relevée, dans laquelle l'interrupteur 6 coupe l'alimentation des moyens de chauffe. Cette position correspond à la position de rappel.

L'interrupteur 6 est associé à un moyen de commande 15 accessible de l'extérieur du boîtier 1, ledit moyen de commande étant susceptible d'occuper une position "marche" dans laquelle l'interrupteur 6 est susceptible de coopérer avec la zone d'actionnement de l'organe de détection 4 de présence de la cuve 2 pour fermer le circuit d'alimentation de l'appareil, et une position "arrêt" dans laquelle l'interrupteur 6 ouvre ledit circuit d'alimentation.

Tel que montré à la figure 1 le moyen de commande 15 est formé d'une roue portant une came 16 montée mobile en rotation dans le boîtier 1 sur un axe 14 portant un bouton de manoeuvre 7 accessible à l'utilisateur. L'interrupteur 6 est avantageusement monté libre en rotation sur un axe 8 issu du boîtier 1. La patte 9 permet de basculer l'interrupteur 6 entre la première et la deuxième position. De préférence le boîtier 1 est réalisé en matière plastique et l'axe 8 est obtenu lors du moulage du boîtier 1.

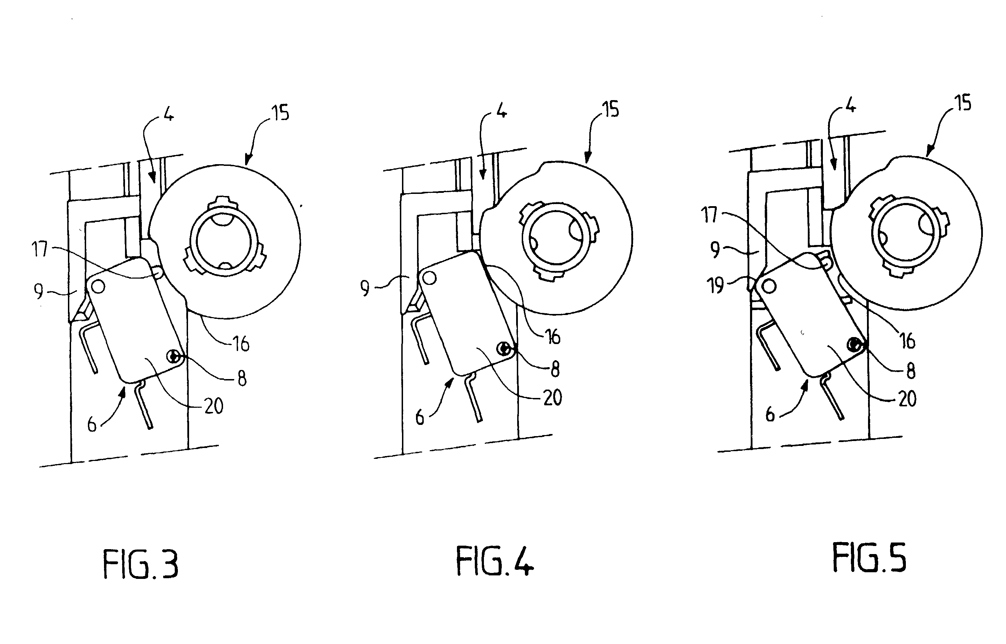

Tel que mieux montré aux figures 3 à 5 l'interrupteur 6 comporte un boîtier d'interrupteur 20 et un bouton d'interrupteur 17 susceptible de coopérer avec la came 16.

A titre de variante, non montrée aux figures, le bouton d'interrupteur 17 pourrait coopérer avec la patte 9 de l'organe de détection 4, le boîtier d'interrupteur 20 coopérant alors avec la came 16.

A titre de variante, également non montrée aux figures, le moyen de commande 15 pourrait être mobile en translation et commander par exemple l'axe 14 par l'intermédiaire d'une crémaillère.

A la figure 3 l'organe de détection 4 occupe la position dans laquelle la cuve 2 (non montrée à la figure) est présente et le moyen de commande 15 occupe la position "arrêt". Le boîtier d'interrupteur 20 vient en appui contre la patte 9 et le bouton d'interrupteur 17 occupe une position relevée dans laquelle le circuit d'alimentation est ouvert.

A la figure 4 l'organe de détection 4 occupe également la position dans laquelle la cuve 2 (non montrée à la figure) est présente, mais le moyen de commande 15 occupe la position "marche". Le boîtier d'interrupteur 20 vient en appui contre la patte 9 et le bouton d'interrupteur 17 repoussé par la came 16 occupe une position enfoncée dans laquelle le circuit d'alimentation est fermé. On notera que la came 16 se prolonge sur la périphérie de la roue ce qui permet d'envisager plusieurs positions "marche" pour le moyen de commande 15, ce moyen de commande pouvant être par exemple associé au bouton de réglage de la consigne d'un thermostat à température de consigne variable.

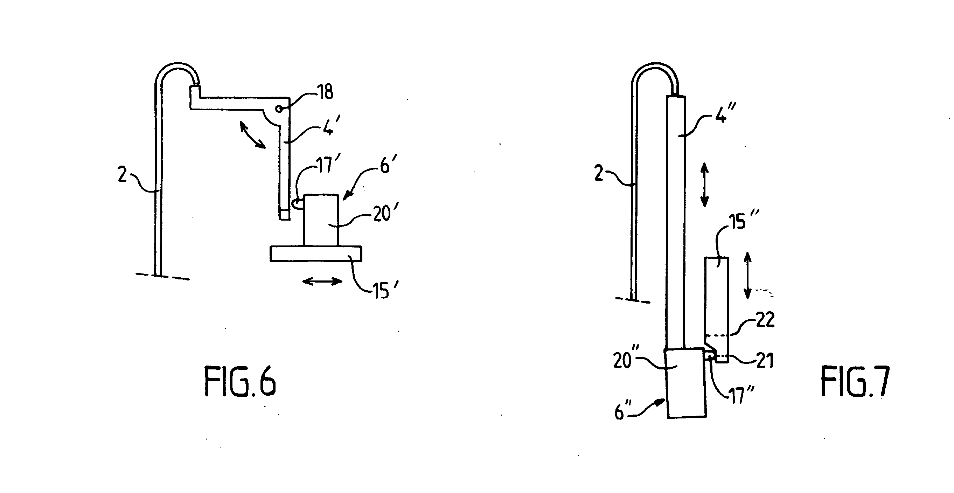

A la figure 5 l'organe de détection 4 occupe la position dans laquelle la cuve 2 (non montrée à la figure) est absente ou mal positionnée et le moyen de commande 15 occupe la position "marche". Le boîtier d'interrupteur 20 vient en appui contre une extrémité biseautée 19 de la patte 9 et le bouton d'interrupteur 17 occupe une position relevée dans laquelle le circuit d'alimentation est ouvert.

Le dispositif présenté aux figures 1 à 5 fonctionne et s'utilise de la manière suivante. Lors du déplacement du moyen de commande 15 de la position "arrêt" à une position "marche" la came 16 tend à repousser le bouton d'interrupteur 17.

Si la cuve 2 est présente dans le boîtier 1, la patte 9 bloque l'interrupteur 6 et le bouton d'interrupteur 17 est enfoncé, fermant ainsi le circuit électrique.

En cas d'absence de la cuve 2 ou en cas de mauvais positionnement de la cuve 2 dans le boîtier 1, le moyen de rappel 5 repousse l'organe de détection 4 vers le haut. L'interrupteur 6 vient alors en appui sur l'extrémité biseautée 19 de la patte 9 et la came 16 ne peut repousser le bouton d'interrupteur 17. Le circuit électrique reste alors ouvert.

Si la cuve 2 est mise en place dans le boîtier 1, l'organe de détection 4 est déplacé contre le moyen de rappel 5 et la patte 9 vient repousser l'interrupteur 6 contre la came 16. Le bouton d'interrupteur 17 est alors enfoncé et le circuit électrique est fermé. L'appareil peut fonctionner.

Dans l'exemple de réalisation montré à la figure 6, l'organe de détection 4' de présence de la cuve 2 est monté mobile en rotation sur un axe 18 issu du boîtier (non montré à la figure) contre un moyen de rappel (non montré à la figure) et le moyen de commande 15' est mobile latéralement entre une position "marche" et une position "arrêt". Le boîtier 20' de l'interrupteur 6' est monté sur le moyen de commande 15'. Le circuit électrique est fermé lorsque le bouton d'interrupteur 17' est en position enfoncée et est ouvert lorsque le bouton d'interrupteur 17' est en position relevée.

Le fonctionnement de cet exemple de réalisation est pour l'utilisateur comparable à celui de l'exemple précédent. Lorsque la cuve 2 est présente dans le boîtier et que le moyen de commande 15' occupe une position "marche" le bouton d'interrupteur 17' occupe sa position enfoncée pour laquelle les moyens de chauffe sont alimentés, la cuve 2 repoussant l'organe de détection 4 contre le bouton d'interrupteur 17' monté sur le moyen de commande 15'. En l'absence de la cuve 2 ou lorsque le moyen de commande 15' occupe la position "arrêt", le bouton d'interrupteur 17' ne peut être atteint par l'organe de détection 4', et occupe sa position relevée pour laquelle les moyens de chauffe ne sont pas alimentés.

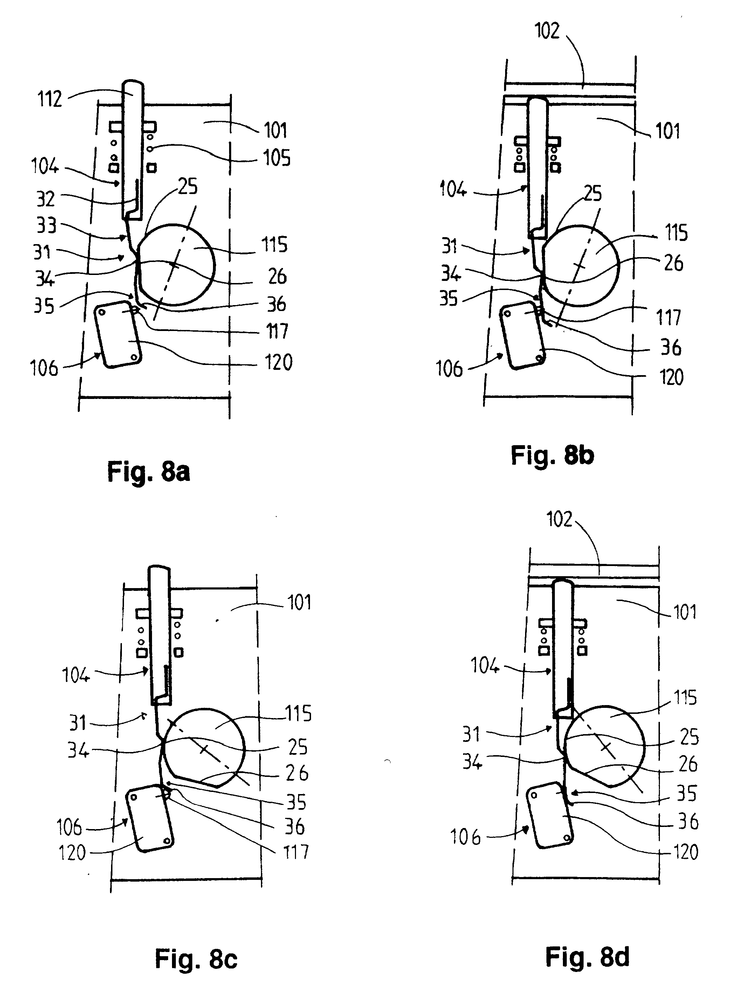

Dans l'exemple de réalisation montré à la figure 7, l'organe de détection 4" de présence de la cuve 2 est mobile verticalement contre un ressort de rappel (non montré à la figure) et le moyen de commande 15" est mobile verticalement. Le boîtier 20" de l'interrupteur 6" est monté sur l'organe de détection 4". Le circuit électrique est fermé lorsque le bouton d'interrupteur 17" est en position relevée et est ouvert lorsque le bouton d'interrupteur 17" est en position enfoncée. Le moyen de commande 15" est susceptible d'occuper une position "arrêt" 22 dans laquelle le bouton d'interrupteur 17" est en position enfoncée et une position "marche" 21, pour laquelle le bouton d'interrupteur 17" occupe une position relevée en présence de la cuve 2 dans le boîtier, tel que montré à la figure 7, le boîtier recevant la cuve n'étant pas représenté, et une position enfoncée en l'absence de cuve.

Le fonctionnement de cet exemple de réalisation est pour l'utilisateur comparable à celui des exemples précédents. Toutefois, lorsque la cuve 2 est présente dans le boîtier 1 et que le moyen de commande 15" occupe la position "marche" 21, le bouton d'interrupteur 17" occupe sa position relevée de repos pour laquelle les moyens de chauffe sont alimentés. En l'absence de la cuve 2 ou lorsque le moyen de commande 15" occupe la position "arrêt" 22 le bouton d'interrupteur 17" actionné par le moyen de commande 15" occupe sa position enfoncée pour laquelle les moyens de chauffe ne sont pas alimentés.

Dans l'exemple de réalisation montré aux figures 8a à 8d, le boîtier 101 appartient à un appareil électrique de cuisson comportant une cuve 102 amovible.

Un organe de détection 104 est monté mobile en translation dans le boîtier 101. L'organe de détection 104 comporte une tige 112 montée coulissante dans le boîtier 101 contre un moyen de rappel 105 entre une position relevée, correspondant à la position de rappel, montrée aux figures 8a et 8c, et une position abaissée lorsque la cuve 102 est en place dans le boîtier, correspondant aux figures 8b et 8d. La cuve 102 en place dans le boîtier 101 repousse l'organe de détection 104 contre le moyen de rappel 105. La position relevée de l'organe de détection 104 correspond à la position "non sûre" et la position abaissée de l'organe de détection 104 correspond à la position "sûre".

Un moyen de commande 115 est monté mobile en rotation dans le boîtier 101 entre une première position dite "arrêt", montrée aux figures 8a et 8b, et une deuxième position dite "marche", montrée aux figures 8c et 8d. Le moyen de commande 115 comporte une portion de périphérie circulaire 25 adjacente à un méplat 26. Le moyen de commande 115 peut occuper d'autres positions "marche", non montrées aux figures. On notera que la périphérie du moyen de commande 115 est circulaire en dehors du méplat 26 ce qui permet d'envisager plusieurs positions "marche" pour le moyen de commande 115, ce moyen de commande pouvant être par exemple associé au bouton de réglage de la consigne d'un thermostat à température de consigne variable.

Un élément de transmission 31 est associé à l'organe de détection 104. L'élément de transmission 31 est formé par une pièce flexible comportant une partie fixe 32 montée sur la tige 112 et une partie mobile 33. La partie mobile 33 comporte une zone de commande 34 susceptible de coopérer avec le moyen de commande 115 et une zone d'actionnement 35 susceptible de coopérer avec un interrupteur 106 monté dans le boîtier 101.

L'interrupteur 106 comporte un boîtier d'interrupteur 120 monté fixe dans le boîtier 101 et un bouton d'interrupteur 117 susceptible de coopérer avec la zone d'actionnement 35. La zone d'actionnement 35 comporte une surface de came 36 disposée perpendiculairement à la direction du déplacement de ladite zone entre d'une part la position occupée lorsque l'organe de détection 104 est en position "non sûre" et le moyen de commande 115 en position "arrêt", représentée à la figure 8a, et d'autre part la position occupée lorsque l'organe de détection 104 est en position "sûre" et le moyen de commande 115 en position "marche" représentée à la figure 8d, de manière à faciliter l'actionnement du bouton d'interrupteur 117.

Le fonctionnement de cet exemple de réalisation est le suivant. L'organe de détection 104 déplace l'élément de transmission 31 selon une première direction sensiblement verticale et le moyen de commande 115 déplace l'élément de transmission 31 selon une deuxième direction sensiblement horizontale.

L'élément de transmission 31 est en position remontée lorsque l'organe de détection 104 est en position relevée, tel que montré aux figures 8a et 8c, et en position descendue lorsque l'organe de détection 104 est en position abaissée en présence de la cuve 102, tel que montré aux figures 8b et 8d.

L'élément de transmission 31 est en position non repoussée lorsque le méplat 26 coopère avec la zone de commande 34, tel que montré aux figures 8a et 8b, et en position repoussée lorsque la portion de périphérie circulaire 25 coopère avec la zone de commande 34, tel que montré aux figures 8c et 8d.

L'élément de transmission 31 coopère avec le bouton d'interrupteur 117 lorsque l'organe de détection 104 est en position "sûre" et que le moyen de commande 115 est en position "marche", tel que montré à la figure 8d. L'élément de transmission 31 est alors en position "active".

L'élément de transmission 31 ne coopère pas avec le bouton d'interrupteur 117 lorsque l'organe de détection 104 est en position "non sûre" ou que le moyen de commande 115 est en position "arrêt", tel que montré aux figures 8a à 8c.

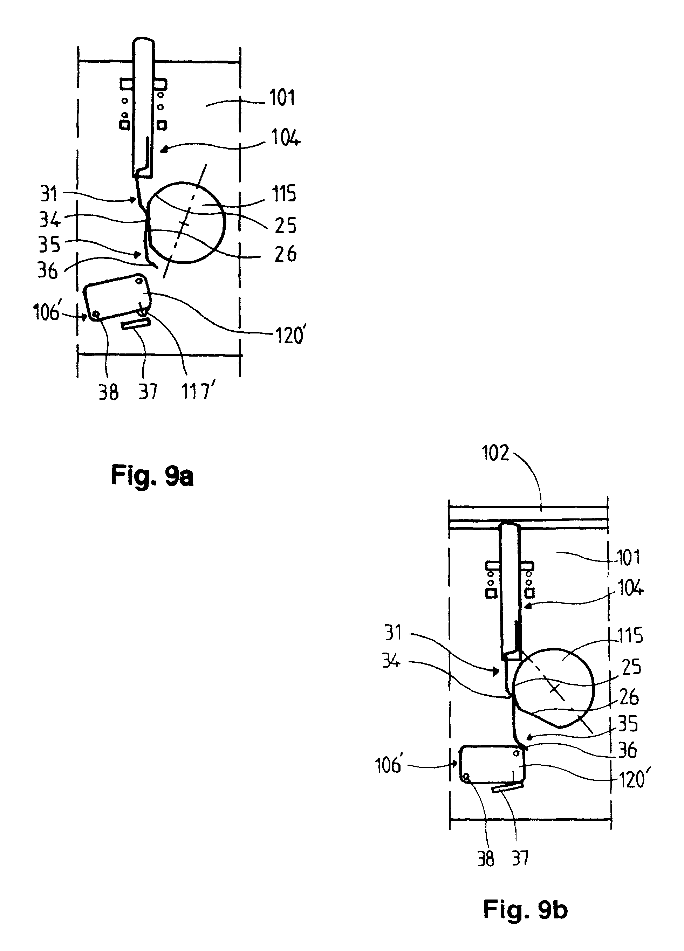

L'exemple de réalisation montré aux figures 9a et 9b diffère de l'exemple précédent en ce que l'interrupteur 106' comporte un boîtier d'interrupteur 120' monté mobile dans le boîtier 101 et un bouton d'interrupteur 117' susceptible de coopérer avec une butée 37 du boîtier 101. La zone d'actionnement 35 est susceptible de coopérer avec le boîtier d'interrupteur 120' monté mobile en rotation sur un axe 38.

Lorsque l'élément de transmission 31 est en position active, tel que montré à la figure 9b, la zone d'actionnement 35 repousse le boîtier d'interrupteur 120' vers le bouton d'interrupteur 117' venant en appui contre la butée 37. Lorsque l'élément de transmission n'est pas en position "active", telle que montré à la figure 9a, la zone d'actionnement 35 libère le boîtier d'interrupteur 120' et le bouton d'interrupteur 117' peut prendre sa position de repos.

La zone d'actionnement 35 comporte une surface de came 36 disposée perpendiculairement à la direction du déplacement de ladite zone entre d'une part la position occupée lorsque l'organe de détection 104 est en position "non sûre" et le moyen de commande 115 en position "arrêt", représentée à la figure 9a, et d'autre part la position occupée lorsque l'organe de détection 104 est en position "sûre" et le moyen de commande 115 en position "marche" représentée à la figure 9b, de manière à faciliter le pivotement du boîtier d'interrupteur 120' autour de l'axe 38 pour actionner le bouton d'interrupteur 117 contre la butée 37.

De nombreuses améliorations peuvent être apportées à ces dispositifs dans le cadre des revendications.

Le moyen de commande et l'organe de détection peuvent être mobiles entre deux positions avec un mouvement différent d'un mouvement de rotation ou d'un mouvement de translation.

A titre de variante le moyen de commande peut être remplacé par un autre organe de détection.

## Revendications

1. Dispositif de sécurité et /ou de commande d'un appareil électrique de cuisson comportant dans un boîtier (1) une enceinte de cuisson (2) et des moyens de chauffe de l'enceinte, ledit dispositif comportant
- au moins un interrupteur (6 ; 6' ; 6") apte à fermer le circuit d'alimentation des moyens de chauffe, cet interrupteur comportant un boîtier (20 ; 20' ; 20") et un bouton d'enclenchement (17; 17'; 17"),
- un organe de détection (4 ; 4' ; 4") mobile entre une première position dite "sûre" correspondant à une configuration prédéterminée de mise en oeuvre de l'appareil et une deuxième position dite "non sûre" correspondant à une autre configuration dans laquelle l'appareil ne doit pas être mis en oeuvre,
- un moyen de commande (15 ; 15' ; 15") accessible de l'extérieur du boîtier (1), mobile entre une première position dite "marche" et une deuxième position dite "arrêt"
**caractérisé en ce que**
le boîtier (20 ; 20' ; 20") de l'interrupteur (6 ; 6' ; 6") est monté mobile de telle sorte à être susceptible d'être déplacé par l'organe de détection (4 ; 4") passant en sa position "sûre", respectivement par le moyen de commande (15') passant en sa position "marche", d'une première position de boîtier dite "non active" dans laquelle l'interrupteur (6 ; 6" ; 6') est en un état ouvert ou fermé à une seconde position dite "active" dans laquelle l'interrupteur (6 ; 6" ; 6') est basculé dans son autre état fermé ou ouvert par le moyen de commande (15 ; 15") passant en sa position "marche", respectivement par l'organe de détection (4') passant en sa position "sûre".

2. Dispositif selon la revendication 1, **caractérisé en ce que** le boîtier (20) de l'interrupteur (6) est monté libre en rotation sur un axe (8), l'organe de détection (4) en position "sûre" étant susceptible d'agir sur le boîtier (20) de l'interrupteur (6), respectivement sur le bouton (17) de l'interrupteur (6), le moyen de commande (15) en position "marche" étant alors susceptible d'agir sur le bouton (17), respectivement sur le boîtier (20).

3. Dispositif selon la revendication 2, **caractérisé en ce que** le boîtier (1) est réalisé en matière plastique et **en ce que** l'axe (8) est obtenu lors du moulage du boîtier (1).

4. Dispositif selon l'une des revendications 1 à 3, **caractérisé en ce que** le moyen de commande (15) est mobile en rotation et comporte une came (16) susceptible en position "marche" d'actionner le bouton (17) de l'interrupteur (6) respectivement le boîtier (20) de l'interrupteur (6), lorsque l'organe de détection (4) est en position "sûre".

5. Dispositif selon l'une des revendications 1 à 4, **caractérisé en ce que** le boîtier (20', 20") de l'interrupteur (6', 6") est monté sur le moyen de commande (15'), respectivement sur l'organe de détection (4"), le bouton (17', 17") de l'interrupteur (6', 6") étant alors susceptible d'être actionné par l'organe de détection (4'), respectivement par le moyen de commande (15").

6. Dispositif de sécurité et/ou de commande d'un appareil électrique de cuisson comportant dans un boîtier (101) une enceinte de cuisson (102) et des moyens de chauffe de l'enceinte, ledit dispositif comportant
- au moins un interrupteur (106 ; 106') apte à fermer le circuit d'alimentation des moyens de chauffe, cet interrupteur comportant un boîtier (120 ; 120') et un bouton d'enclenchement (117 ; 117'),
- un organe de détection (104) mobile entre une première position dite "sûre" correspondant à une configuration prédéterminée de mise en oeuvre de l'appareil et une deuxième position dite "non sûre" correspondant à une autre configuration dans laquelle l'appareil ne doit pas être mis en oeuvre,
- un moyen de commande (115) accessible de l'extérieur du boîtier, mobile entre une première position dite "marche" et une deuxième position dite "arrêt",
**caractérisé en ce qu'**un élément de transmission (31) monté sur l'organe de détection (104) présente une partie mobile (33) comprenant une zone de commande (34), déplaçable par le moyen de commande (115) et une zone d'actionnement (35) susceptible de coopérer avec l'interrupteur (106 ; 106') lorsque d'une part l'organe de détection (104) est en position dite "sûre" et que d'autre part le moyen de commande (115) est en position "marche", l'élément de transmission (31) occupant alors une position dite "active" dans laquelle l'interrupteur (106 ; 106') est dans un état ouvert ou fermé, l'interrupteur (106 ; 106') étant dans son autre état fermé ou ouvert lorsque l'organe de détection (104) est en position dite "non sûre" ou que le moyen de commande (115) est en position "arrêt", la zone d'actionnement (35) n'étant alors pas susceptible de coopérer avec l'interrupteur (106 ; 106').

7. Dispositif selon la revendication 6, **caractérisé en ce que** la zone d'actionnement (35) comporte une surface de came (36) disposée perpendiculairement à la direction du déplacement de ladite zone d'actionnement entre la position occupée par ladite zone d'actionnement lorsque d'une part l'organe de détection (104) est en position "non sûre" et que d'autre part le moyen de commande (115) est en position "arrêt" et la position occupée par ladite zone d'actionnement lorsque d'une part l'organe de détection (104) est en position "sûre" et que d'autre part le moyen de commande (115) est en position "marche".

8. Dispositif selon l'une des revendications 6 ou 7, **caractérisé en ce que** le boîtier (120) de l'interrupteur (106) est monté fixe dans le boîtier (101) de l'appareil et que la zone d'actionnement (35) coopère avec le bouton (117) de l'interrupteur (106) lorsque l'élément de transmission (31) occupe la position "active".

9. Dispositif selon l'une des revendications 6 ou 7, **caractérisé en ce que** le boîtier (120') de l'interrupteur (106') est monté mobile dans le boîtier (101) de l'appareil et que la zone d'actionnement (35) coopère avec le boîtier (120') de l'interrupteur (106') pour repousser le bouton (117') de l'interrupteur (106') contre une butée (37) du boîtier (101) lorsque l'élément de transmission (31) occupe la position "active".

10. Dispositif selon la revendication 9, **caractérisé en ce que** le boîtier (120') de l'interrupteur (106') est monté mobile en rotation autour d'un axe (38) disposé dans le boîtier (101) de l'appareil.

11. Dispositif selon l'une des revendications 1 à 10, **caractérisé en ce que** le moyen de commande (15 ; 115) est susceptible d'occuper plusieurs positions "marche".

12. Dispositif selon l'une des revendications 1 à 11, **caractérisé en ce que** le moyen de commande (15 ; 115) est formé par le bouton de commande d'un thermostat à température de consigne réglable.

## Claims

1. A safety and/or control device for an electrical cooking appliance comprising a casing (1) containing a cooking enclosure (2) and means for heating the enclosure, said device comprising:
- at least one switch (6; 6'; 6") suitable for closing the power supply circuit of the heater means, said switch comprising a box (20; 20';20") and a trigger button (17; 17'; 17");
- a detector member (4; 4'; 4") mounted to move between a "safe" first position corresponding to a predetermined configuration in which the appliance can be operated, and a "not safe" second position corresponding to another configuration in which the appliance must not be put into operation; and
- control means (15; 15', 15") accessible from outside the casing (1) and movable between an "ON" first position and an "OFF" second position;
the device being **characterized in that** the box (20; 20'; 20") of the switch (6; 6'; 6") is movably mounted in such a manner as to be capable of being displaced by the detector member (4; 4") passing into its "safe" position, or by the control means (15') passing into its "ON" position, so as to move from a "non-active" first position of the box in which the switch (6; 6"; 6') is in an open or closed state, to an "active" second position in which the switch (6; 6"; 6') will be changed over into its other, closed or open, state in the event of the control means (15; 15") passing into its "ON" position or the detector member (4') passing into its "safe" position.

2. A device according to claim 1, **characterized in that** the box (20) of the switch (6) is mounted free to rotate about a pin (8), the detector member (4) in the "safe" position being capable of acting on the box (20) of the switch (6) or on the button (17) of the switch (6), the control means (15) in the "ON" position then being suitable for acting on the button (17) or on the box (20).

3. A device according to claim 2, **characterized in that** the casing (1) is made of plastics material and **in that** the pin (8) is obtained while molding the casing (1 ).

4. A device according to any one of claims 1 to 3, **characterized in that** the control means (15) is movable in rotation and has a cam (16) capable, in the "ON" position, of actuating the button (17) of the switch (6), or of actuating the box (20) of the switch (6), when the detector member (4) is in its "safe" position.

5. A device according to any one of claims 1 to 4, **characterized in that** the box (20', 20") of the switch (6', 6") is mounted on the control means (15'), or on the detector member (4"), the button (17', 17") of the switch (6', 6") then being capable of being actuated by the detector member (4'), or by the control means (15").

6. A safety and/or control device for an electrical cooking appliance comprising in a casing (101) a cooking enclosure (102) and means for heating the enclosure, said device comprising:
- at least one switch (106; 106') suitable for closing the power supply circuit of the heater means, said switch comprising a box (120; 120') and a trigger button (117; 117');
- a detector member (104) mounted to move between a "safe" first position corresponding to a predetermined configuration in which the appliance can be operated, and a "not safe" second position corresponding to another configuration in which the appliance must not be put into operation; and
- control means (115) accessible from outside the casing and movable between an "ON" first position and an "OFF" second position;
**characterized in that** a transmission element (31) mounted on the detector member (104) presents a moving portion (33) having a control zone (34) that is displaceable by the control means (115) and an actuation zone (35) suitable for co-operating with the switch (106; 106') when firstly the detector member (104) is in the "safe" position and secondly the control means (115) is in the "ON" position, the transmission element (31) then occupying an "active" position in which the switch (106; 106') is in an open or closed state, the switch (106; 106') being in its other closed or open state when the detector member (104) is in the "not safe" position or the control means (115) is in the "OFF" position, the actuation zone (35) then not being capable of co-operating with the switch (106; 106').

7. A device according to claim 6, **characterized in that** the actuation zone (35) has a cam surface (36) disposed perpendicularly to the travel direction of said actuation zone between the position occupied by said actuation zone when firstly the detector member (104) is in the "not safe" position and secondly the control means (115) is in the "OFF" position, and the position occupied by said actuation zone when firstly the detector member (104) is in the "safe" position and secondly the control means (115) is in the "ON" position.

8. A device according to claim 6 or claim 7, **characterized in that** the box (120) of the switch (106) is mounted in a fixed position in the casing (101) of the appliance and that the actuation zone (35) co-operates with the button (117) of the switch (106) when the transmission element (31) occupies the "active" position.

9. A device according to claim 6 or claim 7, **characterized in that** the box (120') of the switch (106') is movably mounted in the casing (101) of the appliance and that the actuation zone (35) co-operates with the box (120') of the switch (106') to push the button (117') of the switch (106') against an abutment (37) of the casing (101) when said transmission element (31) occupies the "active" position.

10. A device according to claim 9, **characterized in that** the box (120') of the switch (106') is mounted to rotate about a pin (38) disposed inside the casing (101) of the appliance.

11. A device according to any one of claims 1 to 10, **characterized in that** the control means (15; 115) is suitable for occupying a plurality of "ON" positions.

12. A device according to any one of claims 1 to 11, **characterized in that** the control means (15; 115) is formed by the control knob of a thermostat having an adjustable setpoint temperature.

## Patentansprüche

1. Sicherheits- und/oder Steuervorrichtung für ein elektrisches Kochgerät, das in einem Gehäuse (1) einen Kochraum (2) und Mittel zum Heizen des Raums aufweist, wobei die Vorrichtung folgendes aufweist:
- wenigstens einen Schalter (6; 6'; 6"), der dazu geeignet ist, den Versorgungskreis für die Heizmittel zu schließen, wobei dieser Schalter ein Gehäuse (20; 20'; 20") und einen Rastknopf (17; 17'; 17") aufweist,
- ein Erfassungsorgan (4; 4'; 4"), das zwischen einer ersten, sogenannten "sicheren" Position, die einer vorbestimmten Verwendungskonfiguration des Geräts entspricht, und einer zweiten, sogenannten "nicht sicheren" Position beweglich ist, die einer anderen Konfiguration entspricht, in welcher das Gerät nicht verwendet werden darf,
- ein Steuermittel (15; 15'; 15"), das von außerhalb des Gehäuses (1) zugänglich und zwischen einer ersten, sogenannten "Ein"-Position und einer zweiten, sogenannten "Aus"-Position beweglich ist,
**dadurch gekennzeichnet, daß**
das Gehäuse (20; 20'; 20") des Schalters (6; 6'; 6") derart beweglich angebracht ist, daß es von dem Erfassungsorgan (4; 4"), das in seine "sichere" Position gelangt, bzw. von dem Steuermittel (15'), das in seine "Ein"-Position gelangt, aus einer ersten, sogenannten "nicht aktiven" Gehäuseposition, in welcher sich der Schalter (6; 6"; 6') in einem geöffneten oder geschlossenen Zustand befindet, in eine zweite, sogenannte "aktive" Position verschoben werden kann, in welcher der Schalter (6; 6"; 6') von dem Steuermittel (15; 15"), das in seine "Ein"-Position gelangt, bzw. von dem Erfassungsorgan (4'), das in seine "sichere" Position gelangt, in seinen anderen, geschlossenen oder geöffneten Zustand gekippt wird.

2. Vorrichtung nach Anspruch 1, **dadurch gekennzeichnet, daß** das Gehäuse (20) des Schalters (6) frei drehbar an einer Achse (8) angebracht ist, wobei das Erfassungsorgan (4) in der "sicheren" Position auf das Gehäuse (20) des Schalters (6) bzw. auf den Knopf (17) des Schalters (6) wirken kann, wobei das Steuermittel (15) in der "Ein"-Position dann auf den Knopf (17) bzw. auf das Gehäuse (20) wirken kann.

3. Vorrichtung nach Anspruch 2, **dadurch gekennzeichnet, daß** das Gehäuse (1) aus Kunststoff hergestellt ist, und daß die Achse (8) beim Formen des Gehäuses (1) erhalten wird.

4. Vorrichtung nach einem der Ansprüche 1 bis 3, **dadurch gekennzeichnet, daß** das Steuermittel (15) drehbeweglich ist und eine Nocke (16) aufweist, welche in der "Ein"-Position den Knopf (17) des Schalters (6) bzw. das Gehäuse (20) des Schalters (6) betätigen kann, wenn das Erfassungsorgan (4) in der "sicheren" Position ist.

5. Vorrichtung nach einem der Ansprüche 1 bis 4, **dadurch gekennzeichnet, daß** das Gehäuse (20', 20") des Schalters (6', 6") an dem Steuermittel (15') bzw. an dem Erfassungsorgan (4") angebracht ist, wobei der Knopf (17', 17") des Schalters (6', 6") dann von dem Erfassungsorgan (4') bzw. von dem Steuermittel (15") betätigt werden kann.

6. Sicherheits- und/oder Steuervorrichtung für ein elektrisches Kochgerät, das in einem Gehäuse (101) einen Kochraum (102) und Mittel zum Heizen des Raums aufweist, wobei die Vorrichtung folgendes aufweist:
- wenigstens einen Schalter (106; 106'), der dazu geeignet ist, den Versorgungskreis für die Heizmittel zu schließen, wobei dieser Schalter ein Gehäuse (120; 120') und einen Rastknopf (117; 117') aufweist,
- ein Erfassungsorgan (104), das zwischen einer ersten, sogenannten "sicheren" Position, die einer vorbestimmten Verwendungskonfiguration des Geräts entspricht, und einer zweiten, sogenannten "nicht sicheren" Position beweglich ist, die einer anderen Konfiguration entspricht, in welcher das Gerät nicht verwendet werden darf,
- ein Steuermittel (115), das von außerhalb des Gehäuses zugänglich und zwischen einer ersten, sogenannten "Ein"-Position und einer zweiten, sogenannten "Aus"-Position beweglich ist,
**dadurch gekennzeichnet, daß** ein Übertragungselement (31), welches an dem Erfassungsorgan (104) angebracht ist, einen beweglichen Teil (33) mit einer Steuerzone (34), die von dem Steuermittel (115) verschoben werden kann, und einer Betätigungszone (35) aufweist, die mit dem Schalter (106; 106') zusammenwirken kann, wenn sich einerseits das Erfassungsorgan (104) in der sogenannten "sicheren" Position befindet und sich andererseits das Steuermittel (115) in der "Ein"-Position befindet, wobei das Übertragungselement (31) dann eine sogenannte "aktive" Position einnimmt, in welcher sich der Schalter (106; 106') in einem geöffneten oder geschlossenen Zustand befindet, wobei sich der Schalter (106; 106') in seinem anderen, geschlossenen oder geöffneten Zustand befindet, wenn sich das Erfassungsorgan (104) in der sogenannten "nicht sicheren" Position befindet oder sich das Steuermittel (115) in der "Aus"-Position befindet, wobei die Betätigungszone (35) dann nicht mit dem Schalter (106; 106') zusammenwirken kann.

7. Vorrichtung nach Anspruch 6, **dadurch gekennzeichnet, daß** die Betätigungszone (35) eine Nockenfläche (36) aufweist, welche senkrecht zu der Verschiebungsrichtung der Betätigungszone zwischen der Position, welche von der Betätigungszone eingenommen wird, wenn sich einerseits das Erfassungsorgan (104) in der "nicht sicheren" Position befindet und sich andererseits das Steuermittel (115) in der "Aus"-Position befindet, und der Position angeordnet ist, welche von der Betätigungszone eingenommen wird, wenn sich einerseits das Erfassungsorgan (104) in der "sicheren" Position befindet und sich andererseits das Steuermittel (115) in der "Ein"-Position befindet.

8. Vorrichtung nach einem der Ansprüche 6 oder 7, **dadurch gekennzeichnet, daß** das Gehäuse (120) des Schalters (106) in dem Gehäuse (101) des Geräts fest angebracht ist, und daß die Betätigungszone (35) mit dem Knopf (117) des Schalters (106) zusammenwirkt, wenn das Übertragungselement (31) die "aktive" Position einnimmt.

9. Vorrichtung nach einem der Ansprüche 6 oder 7, **dadurch gekennzeichnet, daß** das Gehäuse (120') des Schalters (106') in dem Gehäuse (101) des Geräts beweglich angebracht ist, und daß die Betätigungszone (35) mit dem Gehäuse (120') des Schalters (106') zusammenwirkt, um den Knopf (117') des Schalters (106') gegen einen Anschlag (37) des Gehäuses (101) zurückzudrücken, wenn das Übertragungselement (31) die "aktive" Position einnimmt.

10. Vorrichtung nach Anspruch 9, **dadurch gekennzeichnet, daß** das Gehäuse (120') des Schalters (106') drehbeweglich um eine Achse (38) angebracht ist, welche in dem Gehäuse (101) des Geräts angeordnet ist.

11. Vorrichtung nach einem der Ansprüche 1 bis 10, **dadurch gekennzeichnet, daß** das Steuermittel (15; 115) mehrere "Ein"-Positionen einnehmen kann.

12. Vorrichtung nach einem der Ansprüche 1 bis 11, **dadurch gekennzeichnet, daß** das Steuermittel (15; 115) durch den Steuerknopf eines Thermostats mit regelbarer Einstelltemperatur gebildet ist.
